# EUROPÄISCHE PATENTSCHRIFT

(11) **EP 0 946 758 B1**
(45) Veröffentlichungstag und Bekanntmachung des Hinweises auf die Patenterteilung: **04.10.2001**
(21) Anmeldenummer: 97949836.7
(22) Anmeldetag: 16.12.1997
(51) Int. Cl.: C21B 13/00

(54) **VERFAHREN ZUR HERSTELLUNG VON FLÜSSIGEM METALL**
METHOD FOR MAKING LIQUID METAL
PROCEDE DE FABRICATION DE METAL LIQUIDE

(30) Priorität: 17.12.1996 AT 220596
(43) Veröffentlichungstag der Anmeldung: 06.10.1999
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-785 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: NAGL, Michael, A-4204 Reichenau (AT)
(74) Vertreter: Kopecky, Helmut, Dipl.-Ing.
(86) Internationale Anmeldenummer: AT9700277
(87) Internationale Veröffentlichungsnummer: WO9827233

(56) Entgegenhaltungen:
- EP-A- 0 174 291
- GB-A- 882 909
- GB-A- 2 085 480
- US-A- 2 418 394
- US-A- 4 493 732

## Beschreibung

Die Erfindung betrifft ein Verfahren zur Herstellung von flüssigem Metall, insbesondere von Roheisen oder Stahlvorprodukten, aus zumindest teilweise feinteilchenförmigen Metallträgern, insbesondere teilreduziertem oder reduziertem Eisenschwamm, in einem Einschmelzvergaser, in dem unter Zuführung von kohlenstoffhältigem Material und Sauerstoff oder sauerstoffhältigem Gas bei gleichzeitiger Bildung eines Reduktionsgases in einem aus festen Kohlenstoffträgem gebildeten Bett die Metallträger eingeschmolzen werden, gegebenenfalls nach vorheriger Fertigreduktion, sowie einen Einschmelzvergaser zur Durchführung des Verfahrens.

Aus der EP-B - 0 010 627 ist es bekannt, teilchenförmiges eisenhältiges Material, wie vorreduzierten Eisenschwamm, durch eine zentrale Chargieröffnung in einer Haube des Einschmelzvergasers von oben zuzuführen, wobei die Teilchen in den Einschmelzvergaser durch Gravitationswirkung hineinfallen und im im Einschmelzvergaser vorhandenen Fließbett abgebremst werden. Stückige Kohle wird durch eine seitlich in der Haube des Einschmelzvergasers bzw. im den Einschmelzvergaser nach oben hin abschließenden Dom angeordnete Chargieröffnung eingebracht, u.zw. ebenfalls unter Gravitationswirkung. Das im Einschmelzvergaser gebildete Reduktionsgas wird durch die zentrale Chargieröffnung für das eisenhältige Material abgezogen.

Ein Verfahren dieser Art ist für die Verarbeitung von feinteiligen Metallträgern, insbesondere von feinteiligem Eisenschwamm, nicht geeignet, da die feinteiligen Metallträger infolge der starken Gasströmung des in der Vergasungszone gebildeten Reduktionsgases, das durch die zentrale Chargieröffnung in der Haube bzw. im Dom des Einschmelzvergasers abgezogen wird, sofort aus dem Einschmelzvergaser ausgetragen werden würden. Ein solches Austragen der feinteiligen Metallträger wird noch durch die Temperatur im oberen Bereich des Einschmelzvergasers, d.h. im Bereich oberhalb der Vergasungszone, begünstigt, da diese zu nieder ist, um ein Einschmelzen, d.h. ein Agglomerieren der Feinteilchen am Ort der Einbringung zu größeren Teilchen, die in die Vergasungszone trotz des aufwärts strömenden Gases absinken könnten, sicherzustellen.

Aus der EP-A - 0 217 331 ist es bekannt, vorreduziertes Feinerz in einen Einschmelzvergaser zu leiten und mittels eines Plasmabrenners unter Zuführung kohlenstoffhältigen Reduktionsmittels fertigzureduzieren und aufzuschmelzen. Das vorreduzierte Feinerz bzw. das Eisenschwamm-Pulver wird einem im unteren Abschnitt des Einschmelzvergasers vorgesehenen Plasmabrenner zugeführt. Nachteilig ist hierbei, daß durch die Zuführung des vorreduzierten Feinerzes unmittelbar im unteren Einschmelzbereich, d.h. im Bereich der Schmelzenansammlung, ein Fertigreduzieren nicht mehr sichergestellt ist und auf keinen Fall die für eine Weiterverarbeitung des Roheisens nötige chemische Zusammensetzung erreicht werden kann. Zudem ist die Einbringung großer Mengen vorreduzierten Feinerzes wegen des im unteren Bereich des Einschmelzvergasers sich aus Kohle bildenden Fließbettes bzw. Festbettes nicht möglich, da eine ausreichende Abfuhr der Schmelzprodukte aus der Hochtemperaturzone des Plasmabrenners nicht möglich ist. Das Einbringen größerer Mengen vorreduzierten Feinerzes würde sofort zu einem thermischen und mechanischen Versagen des Plasmabrenners führen.

Aus der EP-B - 0 111 176 ist es bekannt, eine Feinkornfraktion von Eisenschwammpartikeln in den Einschrnelzvergaser über ein Fallrohr zuzuleiten, das vom Kopf des Einschmelzvergasers bis in die Nähe des Kohlefließbettes ragt. Am Ende des Fallrohres ist eine Prallplatte zur Geschwindigkeitsminimierung der Feinkornfraktion vorgesehen, wodurch die Austrittsgeschwindigkeit der Feinkornfraktion aus dem Fallrohr sehr gering ist. An der Stelle der Einbringung ist die im Einschmelzvergaser herrschende Temperatur sehr niedrig, wodurch es nicht zu einem sofortigen Aufschmelzen der zugeführten Feinkornfraktion kommen kann. Dies und die niedrige Austrittsgeschwindigkeit aus dem Fallrohr bedingt, daß ein beträchtlicher Anteil der zugeführten Feinkornfraktion mit dem im Einschmelzvergaser erzeugten Reduktionsgas aus diesem wieder ausgetragen wird. Das Einbringen einer größeren Menge von einen Feinanteil enthaltenden Eisenschwammpartikeln bzw. ausschließlich einer Feinkornfraktion ist gemäß diesem Verfahren nicht möglich.

Aus der EP-A - 0 594 557 ist es bekannt, eine Feinkornfraktion von Eisenschwamm mittels eines Fördergases direkt in das im Einschmelzvergaser von der Vergasungszone gebildete Fließbett einzubringen. Dies ist jedoch nachteilig, da hierdurch die Durchgasung des Fließbettes gestört werden kann, denn es kann zu Verstopfungen des wie ein Filter wirkenden Fließbettes infolge der direkt in das Fließbett eingeblasenen Feinkornfraktion kommen. Als Folge davon kann es zu eruptiven Gasdurchbrüchen, die das verstopfte Fließbett aufbrechen, kommen. Hierdurch wird der Vergasungsprozeß für die Kohlenstoffträger und auch der Einschmelzprozeß für das reduzierte Eisenerz stark gestört.

Aus der EP-A - 0 576 414 bzw. EP-A-174 291 ist es bekannt, feinteilige Metallträger in die Vergasungszone über Staubbrenner bzw. Schmelzbrenner zuzuführen. Hierbei ergibt sich eine geringe Einschmelzleistung durch eine kurze Verweilzeit der Teilchen in heißer Flamme.

Die Erfindung bezweckt die Vermeidung dieser Nachteile und Schwierigkeiten und stellt sich die Aufgabe, ein Verfahren der eingangs beschriebenen Art sowie einen Einschmelzvergaser zur Durchführung des Verfahrens zu schaffen, welche das Verarbeiten von feinteilchenförmigen Metallträgern, ohne ein Brikettieren zu erfordern, gestatten, und hierbei einerseits ein Austragen der zugeführten feinteilchenförmigen Metallträger, gegebenenfalls im vorreduzierten oder im fertigreduzierten Zustand, durch das im Einschmelzvergaser erzeugte Reduktionsgas zuverlässig zu vermeiden, und andererseits ein gegebenenfalls erforderliches Fertigreduzieren der Feinteilchen zu sichern. Die Erfindung stellt sich insbesondere die Aufgabe, ein Verfahren zu schaffen, mit dem ein zum Großteil, vorzugsweise ein zu 100 % aus feinteilchenförmigem eisenhältigem Material bestehender Einsatz zu Roheisen und/oder Stahlvormaterial unter Verwendung eines Einschmelzvergasers verarbeitet werden kann.

Diese Aufgabe wird bei einem Verfahren der eingangs beschriebenen Art dadurch gelöst, daß die feinteilchenförmigen Metallträger in eine mittels eines Brennvorganges aufrecht erhaltene Hochtemperatur-Brennzone eingebracht und in dieser, gegebenenfalls nach Fertigreduktion, zumindest größtenteils oder zur Gänze aufgeschmolzen werden, wobei die Hochtemperatur-Brennzone gegenüber dem oberhalb des Bettes befindlichen Freiraum des Einschmelzvergasers räumlich isoliert ist und bis in das Bett reicht, wobei die in der Hochtemperatur-Brennzone gebildeten Abgase aus dieser unter Durchströmung zumindest eines Teiles des Bettes austreten und wobei weiters die Abgase im Bett abgekühlt werden und gemeinsam mit dem im Bett gebildeten Reduktionsgas aus dem Einschmelzvergaser abgezogen werden.

Ein Einschmelzvergaser zur Durchführung des Verfahrens, in den Zuleitungen für sauerstoffhältige Gase, Kohlenstoffträger und Metallträger münden und von dem mindestens eine Gasableitung für in einem aus festen Kohlenstoffträgern gebildeten Bett des Einschmelzvergasers erzeugtes Reduktionsgas ausgeht, und mit einem Abstich für die Metallschmelze und für Schlacke ist dadurch gekennzeichnet, daß mindestens eine feinteilchenförmige Metallträger zuführende Zuleitung in mindestens eine gegenüber dem Freiraum des Einschmelzvergasers räumlich isolierte Hochtemperatur-Brennkammer mündet, die ihrerseits mit einer Mündung in das aus festen Kohlenstoffträgern gebildete Bett ragt und mit einem Brenner ausgestattet ist.

Um eine gute Zugänglichkeit zur Hochtemperatur-Brennkammer sowie eine lange Standzeit derselben sicherzustellen, ist vorteilhaft die Hochtemperatur-Brennkammer als vom Dom des Einschmelzvergasers ausgehende, unten offene, zylinderförmige und mit Feuerfestmaterial ausgestattete Wand ausgebildet.

Eine einfache Konstruktion ist dadurch gekennzeichnet, daß lediglich eine einzige Hochtemperatur-Brennkammer vorgesehen ist, die zentral und mit ihrer Längsachse in der vertikalen Längsachse des Einschmelzvergasers liegend angeordnet ist.

Vorteilhaft ragt die Hochtemperatur-Brennkammer mit ihrem oberen Ende durch den Dom des Einschmelzvergasers nach außen und mündet an diesem außenseitigen Ende die Zuleitung für feinteilchenförmige Metallträger in die Hochtemperatur-Brennkammer, und ist weiters an diesem äußeren Ende der Brenner zentral angeordnet, wodurch Reparaturen am Brenner bzw. ein Austausch desselben in einfacher Weise möglich ist.

Ein idealer Aufbau des Bettes ist erzielbar, wenn gemäß einer bevorzugten Ausführungsform Zuleitungen für Kohlenstoffträger in den Einschmelzvergaser im radialen Abstand von der Hochtemperatur-Brennkammer in den Dom des Einschmelzvergasers ragen.

Die Standzeit läßt sich noch erhöhen, wenn die Wand der Hochtemperatur-Brennkammer mit einer Wand-Innenkühlung versehen ist, wobei vorteilhaft die Wand der Hochtemperatur-Brennkammer kühlmediumdurchströmte Flossenrohre aufweist, die beiderseits mit einer Feuerfestauskleidung versehen sind, sowie weiters zweckmäßig am oberen Ende und am unteren Ende der Hochtemperatur-Brennkammer ringförmige Sammler für ein Kühlmedium, vorzugsweise Kühlwasser, vorgesehen sind, die jeweils in der Wand der Hochtemperatur-Brennkammer integriert sind.

Zweckmäßig ist die Hochtemperatur-Brennkammer an ihrem durch den Dom des Einschmelzvergasers nach außen ragenden Ende mit einem abnehmbaren Deckel versehen und sind der Brenner sowie die Zuleitung im Deckel angeordnet.

Für den Verfahrensablauf ist es vorteilhaft, wenn der Brenner von einem Feinkohle/Sauerstoff-Brenner gebildet ist.

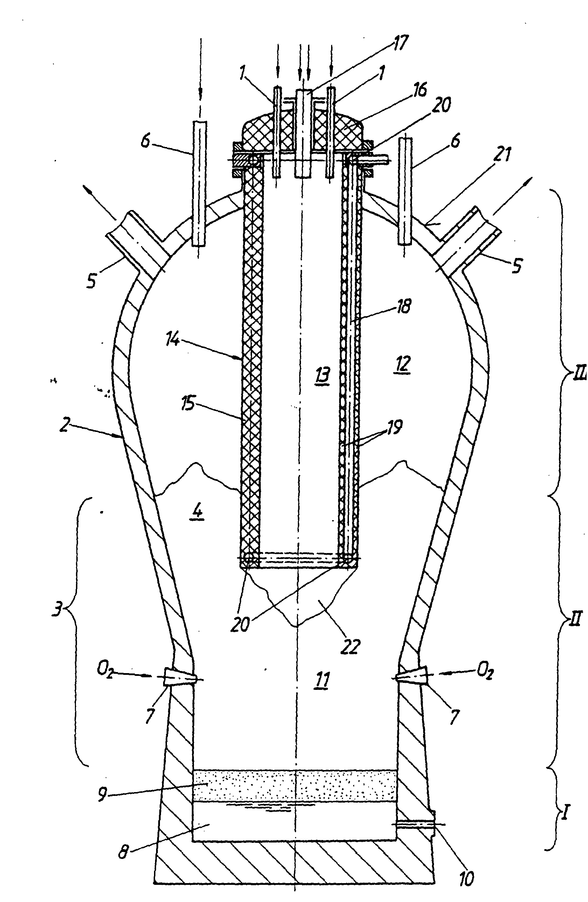

Die Erfindung ist nachfolgend anhand eines in der Zeichnung dargestellten Ausführungsbeispieles näher erläutert, wobei die Figur einen Einschmelzvergaser im Vertikal-Längsschnitt in schematischer Darstellung veranschaulicht.

Vor- bzw. fertigreduziertes Feinerz - im Fall von eisenhältigem Feinerz handelt es sich um Eisenschwammpulver - wird über mindestens eine Förderleitung 1 in später noch näher beschriebener Weise einem Einschmelzvergaser 2 zugeführt. Im Einschmelzvergaser 2 wird in einer Vergasungszone 3 aus Kohle 4 und sauerstoffhältigem Gas ein CO- und H₂-hältiges Reduktionsgas erzeugt, das über eine Reduktionsgasableitung 5 beispielsweise in einen nicht näher dargestellten Wirbelschichtreaktor eingeleitet wird. Das Reduktionsgas durchströmt diesen Wirbelschichtreaktor im Gegenstrom zum Erzdurchfluß zur Reduktion von feinteilchenförmigem eisenoxidhältigem Material und wird aus dem Wirbelschichtreaktor über eine Topgas-Ableitung abgeleitet, anschließend in einem Naßwäscher gekühlt und gewaschen und steht dann als Topgas Verbrauchern zur Verfügung.

Der Einschmelzvergaser 2 weist Zuführungen 6 für feste Kohlenstoffträger in stückiger Form, Zuführungen 7 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf.

In dem Einschmelzvergaser 2 sammelt sich in einem unteren Abschnitt I unterhalb der Vergasungszone 4 schmelzflüssiges Roheisen 8 bzw. schmelzflüssiges Stahlvormaterial und schmelzflüssige Schlacke 9, die über einen Abstich 10 abgestochen werden.

In einem über dem unteren Abschnitt I angeordneten Abschnitt II des Einschmelzvergasers 2 kommt es zur Ausbildung eines Bettes 11 aus den festen Kohlenstoffträgern, vorzugsweise eines Festbettes und/oder eines Wirbelbettes. Der oberhalb des mittleren Abschnittes II vorgesehene obere Abschnitt III fungiert als Beruhigungsraum 12 für das sich im Einschmelzvergaser 2 bildende Reduktionsgas und die mit dem Reduktionsgas mitgerissenen Feststoffteilchen.

Das vor- bzw. fertigreduzierte Feinerz wird in die Vergasungszone 3 über eine vertikal und zentral im Einschmelzvergaser 2 angeordnete Hochtemperatur-Brennzone 13 eingebracht, in die die Förderleitung 1 - mit mehreren Zweigleitungen - einmündet. Die Hochtemperatur-Brennzone 13 ist in einer Hochtemperatur-Brennkammer 14 vorgesehen, die den Dom des Einschmelzvergasers 2 durchsetzt und nach unten bis in das Bett 11 ragt. Sie ist zylinderförmig und unten offen ausgebildet und mit einer feuerfest ausgebildeten Wand 15 ausgestattet.

Am oberen Ende der Hochtemperatur-Brennkammer 14 ist diese mit einem abnehmbaren Deckel 16 versehen, durch den die Förderleitung 1 mit den Zweigleitungen gerührt ist. Zentral im Deckel 16 ist ein Brenner 17, vorzugsweise ein Feinkohle-Sauerstoff-Brenner, angeordnet, dessen Flammstrahl vertikal nach unten gerichtet ist.

Die Wand 15 der Hochtemperatur-Brennkamrner 14 ist mit einer Wandinnenkühlung versehen, die von kühlmediumdurchströmten Flossenrohren 18 gebildet ist. Beiderseits der Flossenrohre 18 ist eine Feuerfestauskleidung 19 angeordnet. Am oberen Ende und am unteren Ende der Hochtemperatur-Brennkammer 14 sind ringförmige Sammler 20 für das Kühlmedium, vorzugsweise Kühlwasser, angeordnet, die jeweils in der Wand 15 der Hochtemperatur-Brennkammer 14 integriert sind.

Die Zuleitungen 6 für die festen stückigen Kohlenstoffträger ragen im radialen Abstand außerhalb der Hochtemperatur-Brennkammer 14 durch den Dom 21 des Einschmelzvergasers 2. Wie aus der Figur ersichtlich, bildet sich radial außerhalb der Hochtemperatur-Brennkammer 14 das Bett 11 ringförmig aus. Unterhalb der Hochtemperatur-Brennkammer 14 kommt es zur Bildung einer etwa kegelförmigen Kaverne 22.

In der Hochtemperaturzone 13, die mit Hilfe des Brenners 17 aufrecht erhalten wird, wird das Eisenschwammpulver zum Großteil, vorzugsweise zur Gänze, aufgeschmolzen, und es tritt in flüssiger Form in das Bett 11 bzw. die Vergasungszone 3 ein. Der aufgeschmolzene Eisenschwamm tropft durch das das Bett 11 bildende Koksgerüst nach unten und wird hierbei aufgekohlt. Die in der Hochtemperatur-Brennzone 13 entstehenden heißen Abgase treten aus der kegelförmigen schüttungsfreien Zone, d.h. die kegelförmige Kaverne 22, in das Bett 11 ein und strömen gemeinsam mit dem in der Vergasungszone 3 gebildeten Reduktionsgas über das der Brennkammer 14 radial benachbarte kreisringförmige Bett nach oben und werden über die Reduktionsgas-Ableitungen 4 abgeführt. Beim Strömen durch das Bett 11 kühlen sich die Abgase auf die gewünschte Abgastemperatur von etwa 1000°C ab.

Erfindungsgemäß erfolgt somit das Einschmelzen zur Gänze bzw. zumindest nahezu zur Gänze oberhalb des Bettes 11, wodurch die Verweilzeit des Eisenschwammes im Einschmelzvergaser 2 wesentlich vergrößert wird. Weiters ist ein Austragen von Eisenschwammpulver aus dem Einschmelzvergaser 2 nicht mehr möglich, da das Eisenschwammpulver mit den in der Hochtemperatur-Brennzone 13 gebildeten Abgasen nach unten direkt dem Bett 11 zugeführt wird. Hier erfolgt mit Hilfe des Bettes 11 die Filterung der Abgase von Schmelzentröpfchen, so daß die Wirkungsweise des Einschmelzvergasers 2 gegenüber dem Stand der Technik wesentlich verbessert ist.

Die Erfindung beschränkt sich nicht auf das dargestellte Ausführungsbeispiel, sondern kann in verschiedener Hinsicht modifiziert werden. Insbesondere ist eine Anwendung für andere Metalle als Eisen, insbesondere Kupfer (oxidisch, sulfidisch), Zinn, Blei (metallisch, oxidisch oder sulfidisch), Nickel und Chrom - die beiden letzten in Erzform - in Betracht zu ziehen.

Auch kann ein Teil des Eisenschwammes in Stückform, z.B. als Pellets, in das Bett 11 eingebracht werden, u.zw. außerhalb der Hochtemperatur-Brennzone 13, so daß die Zone 3 nicht nur als Vergasungszone, sondern als Einschmelzvergasungszone anzusprechen ist.

Eine Anwendung für oxidische Einsatzstoffe, wie z.B. nicht reduziertes Eisenoxid oder oxidisches Kupfer, Zinn, Blei, ist energetisch möglich. In diesem Fall würde eine Vor- und Fertigreduktion in der Hochtemperaturzone stattfinden, wobei die Sauerstoff- und Kohlezufuhr erhöht werden müßten.

## Patentansprüche

1. Verfahren zur Herstellung von flüssigem Metall, insbesondere von Roheisen (8) oder Stahlvorprodukten, aus zumindest teilweise feinteilchenförmigen Metallträgern, insbesondere teilreduziertem oder reduziertem Eisenschwamm, in einem Einschmelzvergaser (2), in dem unter Zuführung von kohlenstoffhältigem Material (4) und Sauerstoff oder sauerstoffhältigem Gas bei gleichzeitiger Bildung eines Reduktionsgases in einem aus festen Kohlenstoffträgern (4) gebildeten Bett (11) die Metallträger eingeschmolzen werden, gegebenenfalls nach vorheriger Fertigreduktion, **dadurch gekennzeichnet, daß** die feinteilchenförmigen Metallträger in eine mittels eines Brennvorganges aufrecht erhaltene Hochtemperatur-Brennzone (13) eingebracht und in dieser, gegebenenfalls nach Fertigreduktion, zumindest größtenteils oder zur Gänze aufgeschmolzen werden, wobei die Hochtemperatur-Brennzone (13) gegenüber dem oberhalb des Bettes (11) befindlichen Freiraum (12) des Einschmelzvergasers (2) räumlich isoliert ist und bis in das Bett (11) reicht, wobei die in der Hochtemperatur-Brennzone (13) gebildeten Abgase aus dieser unter Durchströmung zumindest eines Teiles des Bettes (11) austreten und wobei weiters die Abgase im Bett (11) abgekühlt werden und gemeinsam mit dem im Bett (11) gebildeten Reduktionsgas aus dem Einschmelzvergaser (2) abgezogen werden.

2. Einschmelzvergaser (2) zur Durchführung des Verfahrens nach Anspruch 1 für die Herstellung einer Metallschmelze, vorzugsweise einer Roheisenschmelze (8), aus zumindest teilreduzierten Metallträgem, insbesondere Eisenschwamm, mit einem Anteil an feinteilchenförmigen Metallträgern, und für die Herstellung eines Reduktionsgases durch Kohlevergasung, in welchen Einschmelzvergaser (2) Zuleitungen (1, 6, 7) für Metallträger, Kohlenstoffträger und sauerstoffhältige Gase münden und von dem mindestens eine Gasableitung (5) für in einem aus festen Kohlenstoffträgern (4) gebildeten Bett (11) des Einschmelzvergasers (2) erzeugtes Reduktionsgas ausgeht, und mit einem Abstich (10) für die Metallschmelze (8) und für Schlacke (9), **dadurch gekennzeichnet, daß** mindestens eine feinteilchenförmige Metallträger zuführende Zuleitung (1) in mindestens eine gegenüber dem Freiraum (12) des Einschmelzvergasers (2) räumlich isolierte Hochtemperatur-Brennkammer (14) mündet, die ihrerseits mit einer Mündung in das aus festen Kohlenstoffträgern (4) gebildete Bett (11) ragt und mit einem Brenner (17) ausgestattet ist.

3. Einschmelzvergaser nach Anspruch 2, **dadurch gekennzeichnet, daß** die Hochtemperatur-Brennkammer (14) als vom Dom (21) des Einschmelzvergasers (2) ausgehende, unten offene, zylinderförmige und mit Feuerfestmaterial (19) ausgestattete Wand (15) ausgebildet ist.

4. Einschmelzvergaser nach Anspruch 3, **dadurch gekennzeichnet, daß** lediglich eine einzige Hochtemperatur-Brennkammer (14) vorgesehen ist, die zentral und mit ihrer Längsachse in der vertikalen Längsachse des Einschmelzvergasers (2) liegend angeordnet ist.

5. Einschmelzvergaser nach Anspruch 3 oder 4, **dadurch gekennzeichnet, daß** die Hochtemperatur-Brennkammer (14) mit ihrem oberen Ende durch den Dom (21) des Einschmelzvergasers (2) nach außen ragt und **daß** an diesem außenseitigen Ende die Zuleitung (1) für feinteilchenförmige Metallträger in die Hochtemperatur-Brennkammer (14) mündet, und **daß** weiters an diesem äußeren Ende der Brenner (17) zentral angeordnet ist.

6. Einschmelzvergaser nach einem oder mehreren der Ansprüche 3 bis 5, **dadurch gekennzeichnet, daß** Zuleitungen (6) für Kohlenstoffträger in den Einschmelzvergaser (2) im radialen Abstand von der Hochtemperatur-Brennkammer (14) in den Dom (21) des Einschmelzvergasers (2) ragen.

7. Einschmelzvergaser nach einem oder mehreren der Ansprüche 2 bis 6, **dadurch gekennzeichnet, daß** die Wand (15) der Hochtemperatur-Brennkammer (14) mit einer Wand-Innenkühlung versehen ist.

8. Einschmelzvergaser nach Anspruch 7, **dadurch gekennzeichnet, daß** die Wand (15) der Hochtemperatur-Brennkammer (14) kühlmediumdurchströmte Flossenrohre (18) aufweist, die beiderseits mit einer Feuerfestauskleidung (19) versehen sind.

9. Einschmelzvergaser nach Anspruch 8, **dadurch gekennzeichnet, daß** am oberen Ende und am unteren Ende der Hochtemperatur-Brennkammer (14) ringförmige Sammler (20) für ein Kühlmedium, vorzugsweise Kühlwasser, vorgesehen sind, die jeweils in der Wand (15) der Hochtemperatur-Brennkammer (14) integriert sind.

10. Einschmelzvergaser nach einem oder mehreren der Ansprüche 2 bis 9, **dadurch gekennzeichnet, daß** die Hochtemperatur-Brennkammer (14) an ihrem durch den Dom (21) des Einschmelzvergasers (2) nach außen ragenden Ende mit einem abnehmbaren Deckel (16) versehen ist und **daß** der Brenner (17) sowie die Zuleitung (1) im Deckel (16) angeordnet sind.

11. Einschmelzvergaser nach einem oder mehreren der Ansprüche 2 bis 10, **dadurch gekennzeichnet, daß** der Brenner (17) von einem Feinkohle/Sauerstoff-Brenner gebildet ist.

## Claims

1. Method of producing molten metal, in particular pig iron (8) or steel pre-products, from at least partially fine-particulate metal carriers, in particular partially reduced or reduced sponge iron, in a melter gasifier (2) in which under supply of carbon-containing material (4) and oxygen or oxygen-containing gas and under simultaneous formation of a reducing gas in a bed (11) formed of solid carbon carriers (4) the metal carriers are melted, optionally upon previous complete reduction, **characterized in that** the fine-particulate metal carriers are charged into a high-temperature combustion zone (13) maintained by a combustion process and, optionally upon complete reduction, are melted there at least for the most part or completely, wherein the high-temperature combustion zone (13) is spatially isolated from the freeboard (12) of the melter gasifier (2), located above the bed (11), and extends into the bed (11), wherein the offgases formed in the high-temperature combustion zone (13) exit the same while passing through at least a portion of the bed (11) and wherein furthermore the offgases are cooled in the bed (11) and are withdrawn from the melter gasifier (2) along with the reducing gas formed within the bed (11).

2. Melter gasifier (2) for carrying out the method according to claim 1 for producing a metal melt, preferably a pig iron melt (8), from at least partially reduced metal carriers, in particular sponge iron, containing a portion of fine-particulate metal carriers, and for producing a reducing gas by coal gasification, said melter gasifier (2) having feed ducts (1, 6, 7) for metal carriers, carbon carriers and oxygen-containing gases running into it and having at least one gas discharge duct (5) for reducing gas produced in a bed (11), formed of solid carbon carriers (4), of the melter gasifier (2) departing from it, and with a tap (10) for the metal melt (8) and for slag (9), **characterized in that** at least one feed duct (1) feeding fine-particulate metal carriers opens into at least one high-temperature combustion chamber (14) that is spatially isolated from the freeboard (12) of the melter gasifier (2) and, by a mouth, in turn projects into the bed (11), formed of solid carbon carriers (4), and is provided with a burner (17).

3. Melter gasifier according to claim 2, **characterized in that** the high-temperature combustion chamber (14) is constructed as a wall (15) that departs from the dome (21) of the melter gasifier (2), is open at the bottom, cylindrical in shape and provided with a refractory material (19).

4. Melter gasifier according to claim 3, **characterized in that** only a single high-temperature combustion chamber (14) is provided, which is arranged centrally and with its longitudinal axis lying in the vertical longitudinal axis of the melter gasifier (2).

5. Melter gasifier according to claim 3 or 4, **characterized in that** the high-temperature combustion chamber (14) by its upper end projects outward through the dome (21) of the melter gasifier (2) and that at this exterior end the feed duct (1) for fine-particulate metal carriers runs into the high-temperature combustion chamber (14) and that furthermore the burner (17) is arranged centrally at this outer end.

6. Melter gasifier according to one or several of claims 3 to 5, **characterized in that** feed ducts (6) for carbon carriers, running into the melter gasifier (2), at a radial distance from the high-temperature combustion chamber (14) project into the dome (21) of the melter gasifier (2).

7. Melter gasifier according to one or several of claims 2 to 6, **characterized in that** the wall (15) of the high-temperature combustion chamber (14) is provided with an internal wall cooling.

8. Melter gasifier according to claim 7, **characterized in that** the wall (15) of the high-temperature combustion chamber (14) is equipped with finned tubes (18) through which a cooling medium flows and which are provided with a refractory lining (19) on both sides.

9. Melter gasifier according to claim 8, **characterized in that** at the upper end and at the lower end of the high-temperature combustion chamber (14) there are provided ring-shaped collectors (20) for a cooling medium, preferably cooling water, each being integrated into the wall (15) of the high-temperature combustion chamber (14).

10. Melter gasifier according to one or several of claims 2 to 9, **characterized in that** at its end projecting outward through the dome (21) of the melter gasifier (2) the high-temperature combustion chamber (14) is provided with a removable cover (16) and that the burner (17) and the feed duct (1) are arranged in the cover (16).

11. Melter gasifier according to one or several of claims 2 to 10, **characterized in that** the burner (17) is constituted by a fine-coal/oxygen burner.

## Revendications

1. Procédé pour la production de métal liquide, en particulier de fer brut (8) ou de produits précurseurs en acier, à partir de produits d'apport de métal au moins partiellement sous forme de fines particules, en particulier de mousse de fer réduite ou partiellement réduite, dans un gazéificateur de fusion (2) dans lequel on fait fondre les produits d'apport de métal en apportant un matériau (4) contenant du carbone, et de l'oxygène ou un gaz contenant de l'oxygène en formant simultanément un gaz de réduction dans un lit (11) formé de produits d'apport de carbone solides (4), le cas échéant après réduction finale préalable, **caractérisé en ce que** les produits d'apport de métal sous forme de fines particules sont amenés dans une zone de combustion à haute température (13) maintenue au moyen d'une opération de combustion et sont amenés en fusion dans cette zone tout au moins en grande partie ou en totalité, le cas échéant après réduction finale, dans lequel la zone de combustion à haute température (13) est isolée dans l'espace vis-à-vis de l'espace libre (12) du gazéificateur de fusion (2) qui se trouve au-dessus du lit (11) et s'étend jusqu'à l'intérieur du lit (11), les gaz brûlés qui se forment dans la zone de combustion à haute température (13) sortent de celle-ci en traversant au moins une partie du lit (11), et dans lequel les gaz brûlés sont en outre refroidis dans le lit (11) et sont extraits hors du gazéificateur de fusion (2) conjointement avec le gaz de réduction formée dans le lit (11).

2. Gazéificateur de fusion (2) pour la mise en oeuvre du procédé selon la revendication 1 pour la production d'un métal en fusion, de préférence une fonte d'acier brut (8) à partir de produits d'apport de métal au moins partiellement réduits, en particulier de mousse de fer, avec une proportion de produits d'apport de métal sous forme de fines particules, et pour la production d'un gaz de réduction par gazéification de charbon, gazéificateur de fusion (2) dans lequel débouchent des conduites d'amenée (1, 6, 7) pour des produits d'apport de métal, pour des produits d'apport de carbone, et pour des gaz contenant de l'oxygène, et duquel part au moins une conduite de sortie de gaz (5) pour un gaz de réduction produit dans un lit (11), formé de produits d'apport de carbone solides (4), du gazéificateur de fusion (2), et comprenant une piquée (10) pour le métal en fusion (8) et pour le laitier (9), **caractérisé en ce qu'**au moins une conduite d'amenée (1) qui amène les produits d'apport de métal sous forme de fines particules débouche dans au moins une chambre de combustion à haute température (14) isolée dans l'espace par rapport à la chambre libre (12) du gazéificateur de fusion (2), ladite chambre de combustion dépassant de son côté au moyen d'une embouchure dans le lit (11) formé par les produits d'apport de carbone solides (4), et étant équipée d'un brûleur (17).

3. Gazéificateur de fusion selon la revendication 2, **caractérisé en ce que** la chambre de combustion à haute température (14) est réalisée sous la forme d'une paroi (15), de forme cylindrique et ouverte vers le bas, partant de la coupole (21) du gazéificateur de fusion (2) et équipée d'un matériau réfractaire (19).

4. Gazéificateur de fusion selon la revendication 3, **caractérisé en ce qu'**il est prévu simplement une chambre de combustion à haute température (14) unique, laquelle est agencée de sorte que son axe longitudinal se trouve dans l'axe longitudinal vertical du gazéificateur de fusion (2).

5. Gazéificateur de fusion selon l'une ou l'autre des revendications 3 et 4, **caractérisé en ce que** la chambre de combustion à haute température (14) dépasse par son extrémité supérieure vers l'extérieur à travers la coupole (21) du gazéificateur de fusion (2), et **en ce que** la conduite d'amenée (1) pour les produits d'apport de métal sous forme de fines particules débouche dans la chambre de combustion à haute température (14) au niveau de cette extrémité extérieure, et **en ce que** le brûleur (17) est en outre agencé au centre au niveau de cette extrémité extérieure.

6. Gazéificateur de fusion selon l'une ou plusieurs des revendications 3 à 5, **caractérisé en ce que** des conduites d'amenée (6) pour des produits d'apport de carbone dans le gazéificateur de fusion (2) débouchent dans la coupole (21) du gazéificateur de fusion (2) à distance radiale de la chambre de combustion à haute température (14).

7. Gazéificateur de fusion selon l'une ou plusieurs des revendications 2 à 6, **caractérisé en ce que** la paroi (15) de la chambre de combustion à haute température (14) est pourvue d'un refroidissement de paroi intérieur.

8. Gazéificateur de fusion selon la revendication 7, **caractérisé en ce que** la paroi (15) de la chambre de combustion à haute température (14) comporte des tubes à ailettes (18) parcourus par un fluide de refroidissement, qui sont pourvus des deux côtés d'un revêtement réfractaire (19).

9. Gazéificateur de fusion selon la revendication 8, **caractérisé en ce qu'**il est prévu à l'extrémité supérieure et à l'extrémité inférieure de la chambre de combustion à haute température (14) des collecteurs annulaires (20) pour un fluide de refroidissement, de préférence de l'eau de refroidissement, lesquels sont respectivement intégrés dans la paroi (15) de la chambre de combustion à haute température (14).

10. Gazéificateur de fusion selon l'une ou plusieurs des revendications 2 à 9, **caractérisé en ce que** la chambre de combustion à haute température (14) est pourvue d'un couvercle amovible (16) à son extrémité qui dépasse vers l'extérieur à travers la coupole (21) du gazéificateur de fusion (2), et **en ce que** le brûleur (17) ainsi que la conduite d'amenée (1) sont agencés dans le couvercle (16).

11. Gazéificateur de fusion selon l'une ou plusieurs des revendications 2 à 10, **caractérisé en ce que** le brûleur (16) est constitué par un brûleur à fines/oxygène.
